# EUROPEAN PATENT APPLICATION

(11) **EP 4 764 907 A1**
(43) Date of publication of application: **24.06.2026**
(21) Application number: 25222970.3
(22) Date of filing: 12.12.2025
(51) Int. Cl.: G06F 21/10, G06F 21/30, H04L 9/32, H04L 9/40, H04N 21/4627, H04W 12/08

(54) **INFORMATION PROCESSING DEVICE, INFORMATION PROCESSING METHOD AND PROGRAM**

(30) Priority: 19.12.2024 JP 2024224058
(71) Applicant: Casio Computer Co., Ltd., Tokyo 151-8543 (JP)
(72) Inventor: AKO, Takuya, Tokyo, 205-8555 (JP)
(74) Representative: Plougmann Vingtoft a/s

(57) **Abstract**

An information processing device (20) includes a processor (21) that, as a first processor determines whether a content stored in a storage (23) of the information processing device (20) is in an associated state of being associated with an account, and in response to determining that the content is not in the associated state, controls the information processing device (20) to be in a deletion prohibited state in which execution of a deletion process of deleting the content from the storage (23) is prohibited, or that, as a second processor, determines whether a license stored in the storage (23) and corresponding to a content is in the associated state, and in response to determining that the license is not in the associated state, controls the information processing device (20) to be in a deletion prohibited state in which execution of a deletion process of deleting the license from the storage (23) is prohibited.

## Description

### BACKGROUND OF THE INVENTION

### TECHNICAL FIELD

The present disclosure relates to an information processing device, an information processing method and a program.

### DESCRIPTION OF RELATED ART

There has been a conventional technology of, in an information device where a login with a user account has been performed, making a content usable under the account in response to an input of license information, such as a serial code, associated with the content in advance (e.g., International Publication No. 2016/038989).

### SUMMARY OF THE INVENTION

However, the aforementioned conventional technology has a problem that it is troublesome to log in with an account in advance in order to use a content. On the other hand, if a content is made usable without the login, the licensed content cannot be associated with an account. Accordingly, another problem arises that if a content or a license for the content is deleted, it is difficult to go back to the state before the deletion.

Objects of the present disclosure include properly maintaining the state of a license for a content.

In order to achieve at least one of the objects, an information processing device according to an aspect of the present disclosure is an information processing device including a processor as a first processor or a second processor,
wherein the processor as the first processor determines whether a content stored in a storage of the information processing device is in an associated state of being associated with an account, and in response to determining that the content is not in the associated state, controls the information processing device to be in a first deletion prohibited state in which execution of a first deletion process of deleting the content from the storage is prohibited, or
wherein the processor as the second processor determines whether a license stored in the storage of the information processing device and corresponding to a content is in the associated state of being associated with the account, and in response to determining that the license is not in the associated state, controls the information processing device to be in a second deletion prohibited state in which execution of a second deletion process of deleting the license from the storage is prohibited.

According to the present disclosure, the state of a license for a content can be properly maintained.

### BRIEF DESCRIPTION OF DRAWINGS

FIG. 1 is a block diagram showing the configuration of an information processing system.
FIG. 2 is a block diagram showing a functional configuration of a server.
FIG. 3 is a block diagram showing a functional configuration of a terminal device.
FIG. 4 shows a menu screen.
FIG. 5 is a flowchart showing a control procedure for a content addition process.
FIG. 6 shows a code input screen.
FIG. 7 shows a license code DB.
FIG. 8 shows a license DB in a not-logged-in state.
FIG. 9 shows a terminal license DB.
FIG. 10 shows a login screen.
FIG. 11 shows the license DB after a login with an account.
FIG. 12 is a flowchart showing a control procedure for a content deletion process.
FIG. 13 shows the menu screen after the login with the account.
FIG. 14 shows a my library screen.
FIG. 15 shows the license DB after deletion of a content of an English-Japanese dictionary Y.
FIG. 16 is a flowchart showing a control procedure for a matching content management process.
FIG. 17 shows the terminal license DB with an ungiven license added.
FIG. 18 shows a first notification screen.
FIG. 19 shows the license DB with the ungiven license added.
FIG. 20 shows the license DB in a case where the login is performed after the ungiven license is added.
FIG. 21 shows the my library screen with the ungiven license added.
FIG. 22 shows a second notification screen.
FIG. 23 shows the my library screen of another terminal device.
FIG. 24 shows a third notification screen.

### DETAILED DESCRIPTION

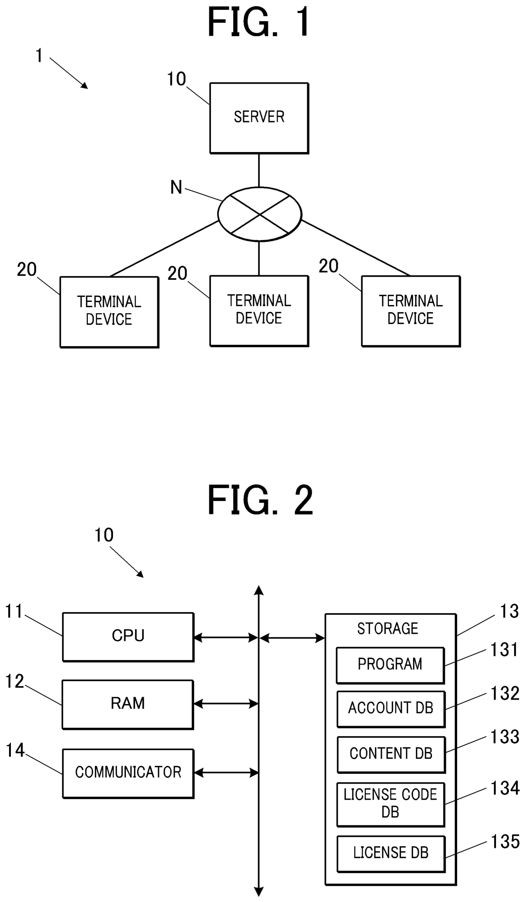

Hereinafter, one or more embodiments of the present disclosure will be described on the basis of the drawings. As shown in FIG. 1, an information processing system 1 of this embodiment includes a server 10 (external storage device or management device) and a plurality of terminal devices 20 (information processing devices). Each terminal device 20 of this embodiment is an electronic dictionary terminal that is capable of displaying information on various dictionary contents and so forth. The terminal devices 20 are used by different users. A single user may own and use two or more terminal devices 20. Each terminal device 20 can perform communication connection with the server 10 via a network N. At least part of a communication path between the server 10 and each terminal device 20 may be wireless communication, such as a wireless LAN. The network N is, for example, but not limited to, the Internet. Hereinafter, the terminal devices 20 in the state of communication connection with the server 10 are referred to as being "online", and the terminal devices 20 in the state of no communication connection with the server 10 are referred to as being "offline".

As shown in FIG. 2, the server 10 includes a central processing unit (CPU) 11 (first processor, first computer or server processor), a random access memory (RAM) 12, a storage 13 (first storage), and a communicator 14. These components of the server 10 are connected with one another via a data transmission path, such as a bus. The CPU 11 is a processor that reads and executes a program(s) 131 stored in the storage 13 and performs various types of arithmetic processing, thereby controlling the operation of each component of the server 10. The server 10 may have multiple processors (e.g., multiple CPUs), and multiple processes that are performed by the CPU 11 in this embodiment may be performed by the multiple processors. In this case, the multiple processors constitute the aforementioned processor. The multiple processors may be involved in the same process (es), or may independently perform different processes in parallel. The RAM 12 provides a working memory space for the CPU 11 and stores temporary data. The storage 13 is a non-transitory storage medium readable by the CPU 11 as a computer and stores the program 131 and various data. The storage 13 includes a nonvolatile memory, such as a hard disk drive (HDD) or a solid state drive (SSD). The various data stored in the storage 13 include an account DB (database) 132, a content DB 133, a license code DB 134, and a license DB 135. The account DB 132 is a database of accounts corresponding to users. Data of each account includes authentication information on the account, for example, account information identifying the account, and a password. The account information and the password are generated by operations by a user at a terminal device 20 and transmitted to the server 10 to be registered in the account DB 132. Thereafter, by inputting the account information and the password at the terminal device 20 and transmitting them to the server 10, a login with the account to the information processing system 1 can be performed. The content DB 133 includes multiple dictionary contents provided for users in a dictionary management service. Each dictionary content includes headwords and explanation information associated with each headword. The type of dictionary is not limited but may include language dictionaries such as a Japanese dictionary and an English-Japanese dictionary, an encyclopedia, and terminology dictionaries in various fields. The details of the license code DB 134 and the license DB 135 will be described later. The communicator 14 performs communication in accordance with a predetermined communication standard. By this communication, the communicator 14 transmits and receives data to and from each terminal device 20 via the network N.

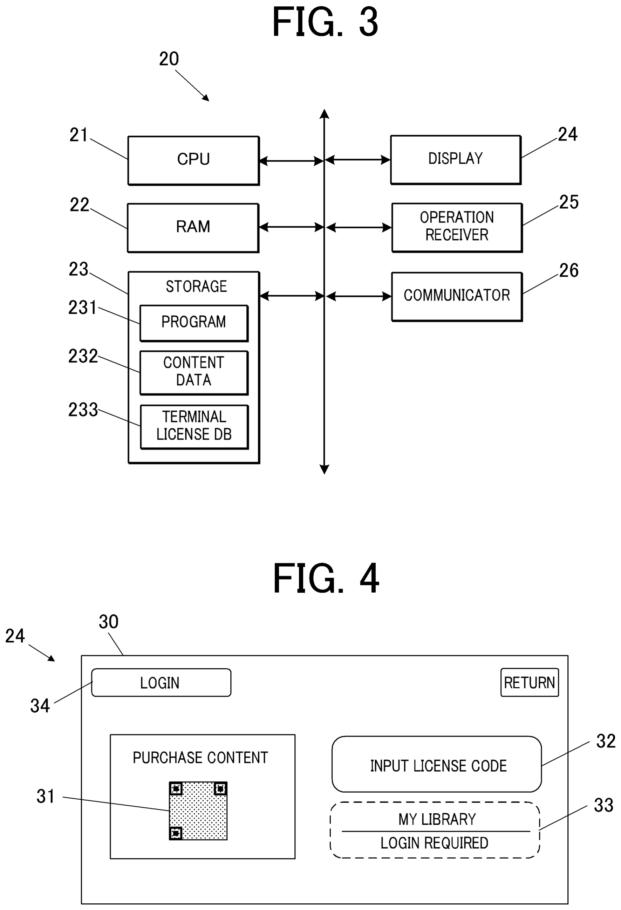

As shown in FIG. 3, each terminal device 20 includes a CPU 21 (processor, second processor or second computer), a RAM 22, a storage 23 (second storage), a display 24, an operation receiver 25, and a communicator 26. These components of the terminal device 20 are connected with one another via a data transmission path, such as a bus. The CPU 21 is a processor that reads and executes a program(s) 231 stored in the storage 23 and performs various types of arithmetic processing, thereby controlling the operation of each component of the terminal device 20. The terminal device 20 may have multiple processors (e.g., multiple CPUs), and multiple processes that are performed by the CPU 21 in this embodiment may be performed by the multiple processors. In this case, the multiple processors constitute the aforementioned processor. The multiple processors may be involved in the same process(es), or may independently perform different processes in parallel. The RAM 22 provides a working memory space for the CPU 21 and stores temporary data. The storage 23 is a non-transitory storage medium readable by the CPU 21 as a computer and stores the program 231 and various data. The storage 23 includes a nonvolatile memory, such as a flash memory. The program 231 is stored in the storage 23 in the form of computer-readable program code. The information processing system 1 has a program set of the program 131 (first program) stored in the storage 13 of the server 10 and the program 231 (second program) stored in the storage 23 of the terminal device 20. The various data stored in the storage 23 include content data 232 and a terminal license DB 233. In the content data 232, various dictionary contents are registered. The details of the terminal license DB 233 will be described later. The display 24 displays various types of information, such as dictionary contents, in accordance with control signals and image data transmitted from the CPU 21. The display 24 is, for example, but not limited to, a liquid crystal display device that performs display with a dot-matrix method. The operation receiver 25 includes, for example, a touch screen superimposed on the display 24 and various operation keys. The operation receiver 25 detects contact operations on the touch screen and outputs pieces of operation information indicating positions of the detected contact operations to the CPU 21. The operation receiver 25 outputs operation signals corresponding to input operations of pressing the operation keys to the CPU 21. The communicator 26 performs communication in accordance with a predetermined communication standard. By this communication, the communicator 26 transmits and receives data to and from the server 10 via the network N.

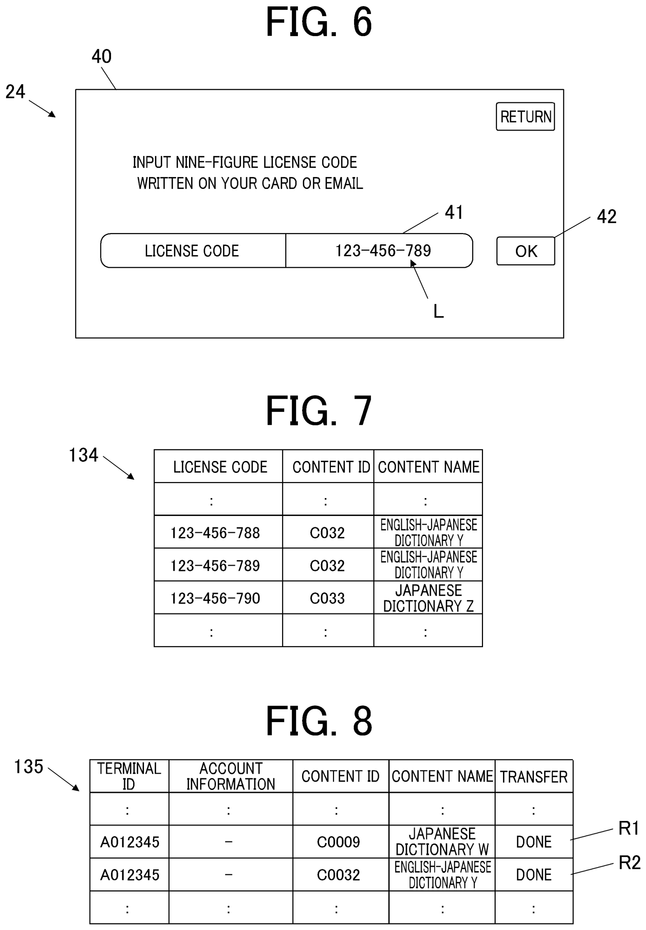

Next, the operation of the information processing system 1 will be described. Although the main body that performs each action/process described below is the CPU 11 of the server 10 or the CPU 21 of the terminal device 20, the server 10 or the terminal device 20 may be described as the main body that performs each action/process for convenience. Further, for convenience, the CPU 11 of the server 10 transmitting data to the terminal device 20 via the communicator 14 may be referred to as "the CPU 11 transmits data", and the CPU 21 of the terminal device 20 transmitting data to the server 10 via the communicator 26 may be referred to as "the CPU 21 transmits data". In the information processing system 1 of this embodiment, the user can purchase an additional dictionary content(s), which may be hereinafter simply referred to as a "content(s)", for use in the terminal device 20 in addition to a dictionary content(s) preinstalled in the terminal device 20 at the time of shipment. The additional content is made usable, for example, after a content purchase procedure, by causing the terminal device 20 to be online and downloading the content data of the content from the content DB 133 of the server 10. The downloaded content is stored in the content data 232 of the storage 23. The content purchase method in this embodiment is a method of purchasing a license code L (license information shown in FIG. 6) for a content at a store or an electronic commerce (EC) site. In the case of purchasing a content at a store, a license code L is printed, for example, on a point of sales activation (POSA) card or a serial number card. In the case of purchasing a content at an EC site, a license code L is written, for example, on an email sent to the user after the purchase. By inputting the license code L at the terminal device 20, the additional content can be downloaded from the server 10 and usable in the terminal device 20. In other words, the license for using the content is given to the terminal device 20.

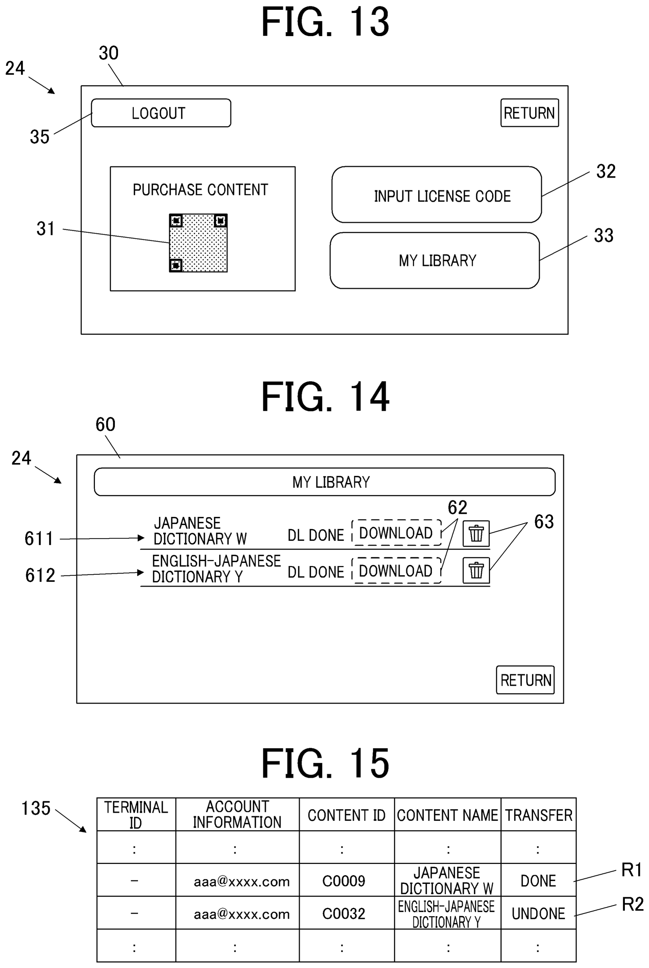

Various operations for content addition and management can be made from a menu screen 30 shown in FIG. 4. The menu screen 30 is displayed on the display 24 by a selection operation on a predetermined operation button on a not-shown home screen of the terminal device 20. FIG. 4 shows the menu screen 30 in a state before a login with an account (which is hereinafter referred to as a "not-logged-in state"). Thus, even while the terminal device 20 of this embodiment is in the not-logged-in state, certain types of operation can be made. On the menu screen 30, a two-dimensional code 31 for purchasing a content (s), a code input button 32 on which a selection operation is made when a license code L is input to add the purchased content, a my library button 33 for managing the added content, and a login button 34 for performing a login with an account are displayed. The two-dimensional code 31 includes information on the URL of an EC site where license codes L for contents can be purchased. By photographing and decoding the two-dimensional code 31 with a smartphone or the like and connecting to the EC site, license codes L for contents can be purchased. When a selection operation is made on the my library button 33 (e.g., when the my library button 33 is touched on a touch screen), a my library screen 60 (shown in FIG. 14) including a list of contents is displayed on the display 24. On the my library button 33, a selection operation can be made only in a state in which a login has been performed with an account (which is hereinafter referred to as a "logged-in state"). In FIG. 4, the terminal device 20 is in the not-logged-in state, and therefore the my library button 33 is displayed in a selection operation invalid state in which no selection operation is valid, and a note of "Login Required" is displayed in the button 33. This selection operation invalid state may be a gray-out state. In the selection operation invalid state, the my library screen 60 is not displayed even when a selection operation is made on the my library button 33.

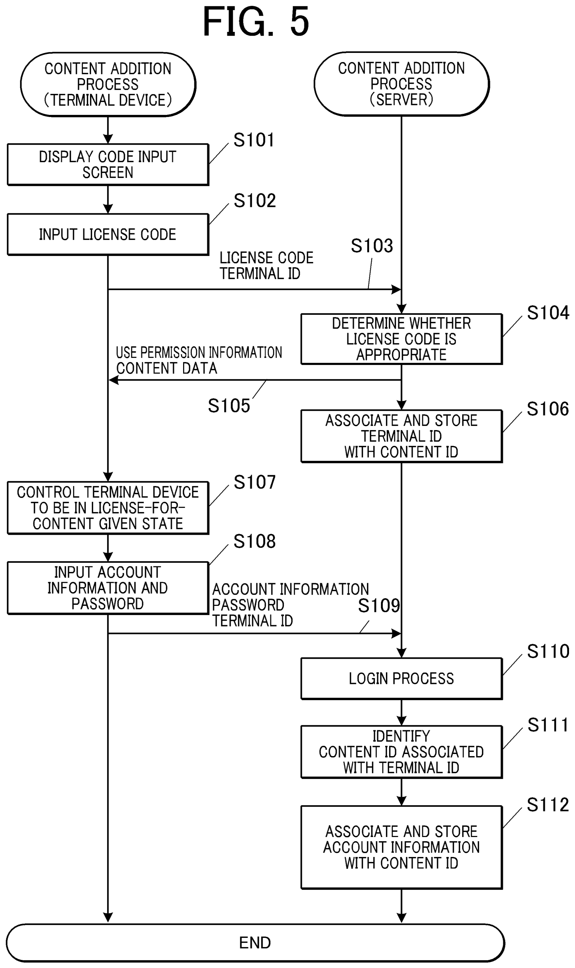

When a selection operation is made on the code input button 32, a content addition process (shown in FIG. 5) is started to add a content to the terminal device 20. Hereinafter, the operation of the information processing system 1 for adding a content will be described following the flowchart in FIG. 5. In FIG. 5, processes (steps) that are performed by the CPU 11 of the server 10 and processes (steps) that are performed by the CPU 21 of the terminal device 20 are shown together. Horizontal arrows represent processes in each of which one of the server 10 and the terminal device 20 transmits data to the other thereof. When the content addition process is started, the CPU 21 of the terminal device 20 causes the display 24 to display a code input screen 40 shown in FIG. 6 (Step S101). On the code input screen 40, a text box 41 for inputting a license code L and a decision button 42 are displayed. The user inputs a license code L written on a POSA card, a serial number card or an email into the text box 41. In the example shown in FIG. 6, "123-456-789" is input as the license code L. When the input details of the license code L are fixed by a selection operation on the decision button 42 (Step S102 in FIG. 5), the CPU 21 transmits the input license code L and the terminal ID of the terminal device 20 to the server 10 (Step S103). Terminal IDs are unique codes assigned to the respective terminal devices 20 and correspond to pieces of identification information that can identify the respective terminal devices 20. Thus, one terminal device 20 can be identified from a terminal ID. The terminal IDs are predetermined for the respective terminal devices 20 and stored in their storages 23. The terminal ID of the terminal device 20 used in this embodiment is "A012345".

When the CPU 11 of the server 10 obtains the license code L and the terminal ID from the terminal device 20, the CPU 11 determines whether the license code L is appropriate (Step S104). In this embodiment, the CPU 11 refers to the license code DB 134 shown in FIG. 7 to determine whether the license code L is appropriate. In the license code DB 134, the license codes L issued and unused are associated and registered with content IDs and content names. The content IDs are unique codes assigned to the respective contents, and one content can be identified from a content ID. The CPU 11 determines that the obtained license code L is appropriate when the obtained license code L matches one of the license codes L registered in the license code DB 134. Further, the CPU 11 identifies a content ID and a content corresponding to the license code L determined as appropriate. In the example shown in FIG. 7, the content ID "C0032" and the content "English-Japanese Dictionary Y" corresponding to the license code L "123-456-789" are identified. In the license code DB 134 shown in FIG. 7, two different license codes L are associated with the same content, namely, the "English-Japanese Dictionary Y". Thus, there may be multiple license codes L for a certain content.

If the CPU 11 determines that the obtained license code L is appropriate, the CPU 11 transmits use permission information to permit use of (give a license for) the content corresponding to the obtained license code L and the content data of the content to the terminal device 20 (Step S105). The CPU 11 associates and stores in the storage 13 the terminal ID obtained in Step S103 in FIG. 5 with the content ID and the content corresponding to the license code L obtained in Step S103 (Step S106). In this embodiment, the CPU 11 associates and registers in the license DB 135 shown in FIG. 8 the terminal ID with the content ID and the content. The license DB 135 is a database in which contents for which licenses are given to the terminal devices 20 and their states are registered. Each record in the license DB 135 includes data items of "Terminal ID", "Account Information", "Content ID", "Content Name" and "Transfer". Of these, the "Account Information" is used to associate a content with an account as described later. The "Content ID" and the "Content Name" respectively represent a content ID and a content name of a content for which a license is given to a terminal device 20 identified by the "Terminal ID". In the example shown in FIG. 8, two records R1 and R2 are registered for the terminal device 20 whose terminal ID is "A012345". The record R1 corresponds to a license for the "Japanese Dictionary W (Content ID: C0009)" given to the terminal device 20, and the record R2 corresponds to a license for the "English-Japanese Dictionary Y (Content ID: C0032)" given to the terminal device 20. Of these, the record R2 is a newly added record as a result of the CPU 11 determining that the license code L "123-456-789" is appropriate in Step S104. The "Transfer" indicates whether the content in each record is already transferred (downloaded) to a terminal device 20 identified by the "Terminal ID".

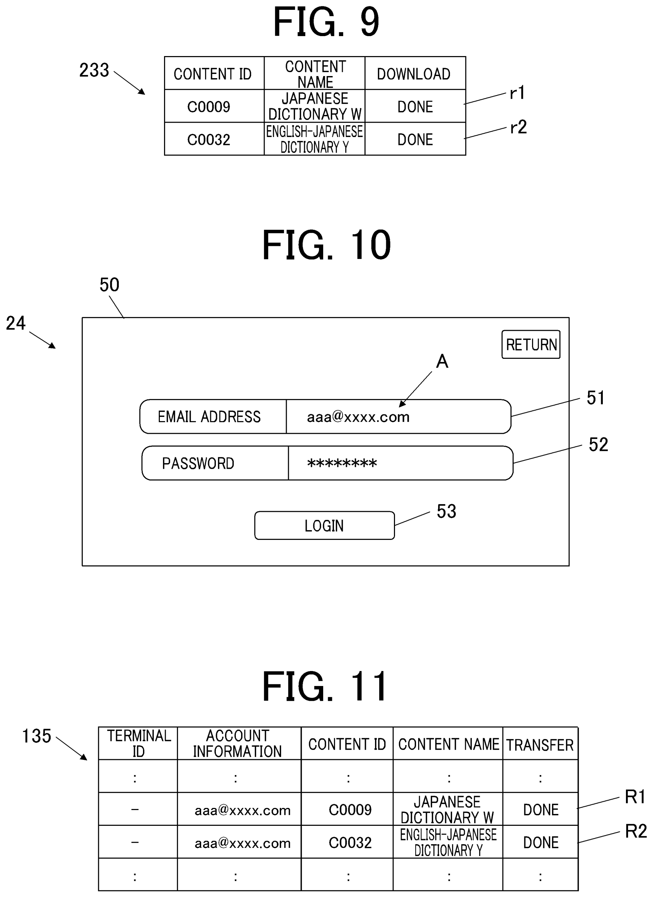

When the CPU 21 of the terminal device 20 obtains the use permission information and the content data from the server 10, the CPU 21 stores the obtained (downloaded) content data in the content data 232. In response to obtaining the use permission information, the CPU 21 controls the terminal device 20 to be in a license-for-content given state in which a license for the content is given (Step S107) . In this embodiment, the CPU 21 registers, in the terminal license DB 233 shown in FIG. 9, a record including the content ID and the content name of the content for which the use permission information has been obtained. The terminal license DB 233 is a database in which contents for which licenses are given to the terminal device 20 are registered. The terminal license DB 233 includes a data item of "Download" indicating whether the content data of each content for which a license is given to the terminal device 20 is already downloaded to the terminal device 20. In the terminal license DB 233 shown in FIG. 9, records r1 and r2 respectively corresponding to the records R1 and R2 in the license DB 135 shown in FIG. 8 are registered. Of these, the record r2 corresponds to the "English-Japanese Dictionary Y (Content ID: C0032)" for which the use permission information and the content data were obtained in Step S105. Since this content is already downloaded, the data item "Download" is "Done". Once the content is registered in the terminal license DB 233, the CPU 21 causes the display 24 to display the details of the content every time a user operation for browsing the content is made.

Thus, in this embodiment, even in the not-logged-in state, in which a login with an account has not been performed at the terminal device 20, contents can be made usable by input of license codes L. In this state (state after Step S107), as shown in FIG. 8, in the license DB 135 of the server 10, licenses for contents are each associated with not an account but the terminal ID of a terminal device 20. Therefore, if a content becomes unusable in the terminal device 20 due to a malfunction or the like of the terminal device 20, it is difficult to recover the state of the license for the content. This is because the terminal ID with which the content is associated is internal data of the terminal device 20, and accordingly it is difficult to obtain the terminal ID in the situation where the terminal device 20 does not operate properly due to a malfunction or the like. Therefore, in this embodiment, when a login with an account is performed after a content is associated with the terminal device 20, a process of associating the content with the account is performed.

When a login with an account is to be performed, the CPU 21 of the terminal device 20 causes the display 24 to display a login screen 50 shown in FIG. 10. The login screen 50 is displayed, for example, when a selection operation is made on the login button 34 on the menu screen 30 shown in FIG. 4. On the login screen 50, a text box 51 for inputting account information A (email address in this embodiment) identifying a user's account, a text box 52 for inputting a password, and a decision button 53 are displayed. The user inputs preregistered account information A on his/her account and password in the text boxes 51 and 52, respectively. In this embodiment, the account information A is an email address, but not limited thereto. The account information A may be an account ID composed of a code including letters and numbers. When a selection operation is made on the decision button 53 to fix the input details of the account information A and the password (Step S108 in FIG. 5), the CPU 21 transmits the input account information A and password and the terminal ID of the terminal device 20 to the server 10 (Step S109). In other words, the CPU 21 associates and transmits the account information A with the terminal ID to the server 10. The CPU 11 of the server 10 performs a login process on the basis of the obtained account information A and password (Step S110). In this embodiment, when the obtained account information A and password match the account information A and the password of one of the accounts registered in the account DB 132, the CPU 11 determines that user authentication has succeeded and performs a login with the account.

The terminal ID transmitted from the terminal device 20 to the server 10 in Step S109 corresponds to information for identifying a license(s) given to the terminal device 20. This is because, as mentioned above, at this point, licenses for contents are each associated with a terminal ID in the license DB 135 shown in FIG. 8. The CPU 11 identifies a content ID(s) associated with the obtained terminal ID (Step S111). The CPU 11 associates and stores in the license DB 135 the obtained account information A with the content ID identified in Step S111 (Step S112). For example, as shown in FIG. 11, the CPU 11 registers "aaa@xxxx.com", which is the obtained account information A, in the data item "Account Information" in the records R1 and R2, thereby associating the account information A with content Ids (C0009 and C0032). At the time, the data of the data item "Terminal ID" may be deleted as shown in FIG. 11 to dissolve the association between the terminal IDs and the content IDs, or may be left as they are to maintain the association between the terminal IDs and the content IDs. When Step S112 in FIG. 5 finishes, the content addition process ends.

Thus, after a content is associated with an account in this manner, the content can be transferred to another terminal device ("terminal device 20z" in this embodiment). For example, in a case where the content "English-Japanese Dictionary Y" is transferred from the terminal device 20 to another terminal device 20z, first, the "English-Japanese Dictionary Y" is deleted from the terminal device 20. Accordingly, the "Transfer" in the record for the "English-Japanese Dictionary Y" in the license DB 135 is changed to "Undone" indicating an un-transferred state, and the "English-Japanese Dictionary Y" can be transferred to the terminal device 20z. In this state, if a login with the same account is performed at the terminal device 20z, the "English-Japanese Dictionary Y" can be downloaded to and usable in the terminal device 20z. In other words, a license for the "English-Japanese Dictionary Y" can be given to the terminal device 20z. Thereafter, the "Transfer" in the record for the "English-Japanese Dictionary Y" in the license DB 135 is updated to "Done".

Next, the operation for deleting a content from the terminal device 20 will be described. In this embodiment, contents can be deleted only when the terminal device 20 is in the logged-in state. This is because, as mentioned above, association between an account and a content(s) is unknown in the not-logged-in state, and accordingly if a content is deleted in the not-logged-in state, it is difficult to recover the state of the license for the content. Further, contents can be deleted only when the terminal device 20 is online. This is because if a content is deleted from the terminal device 20 that is offline, the deletion cannot be reflected in the license DB 135 of the server 10 (i.e., the data item "Transfer" cannot be updated to "Undone"), and the managed transfer state of the content does not match the actual state. In this embodiment, the my library screen 60 can be displayed only when the terminal device 20 is in the logged-in state and online, and deletion buttons 63 (operation elements) (shown in FIG. 14) for deleting contents are displayed only on the my library screen 60. Thus, control is performed such that no content is deleted in the not-logged-in state.

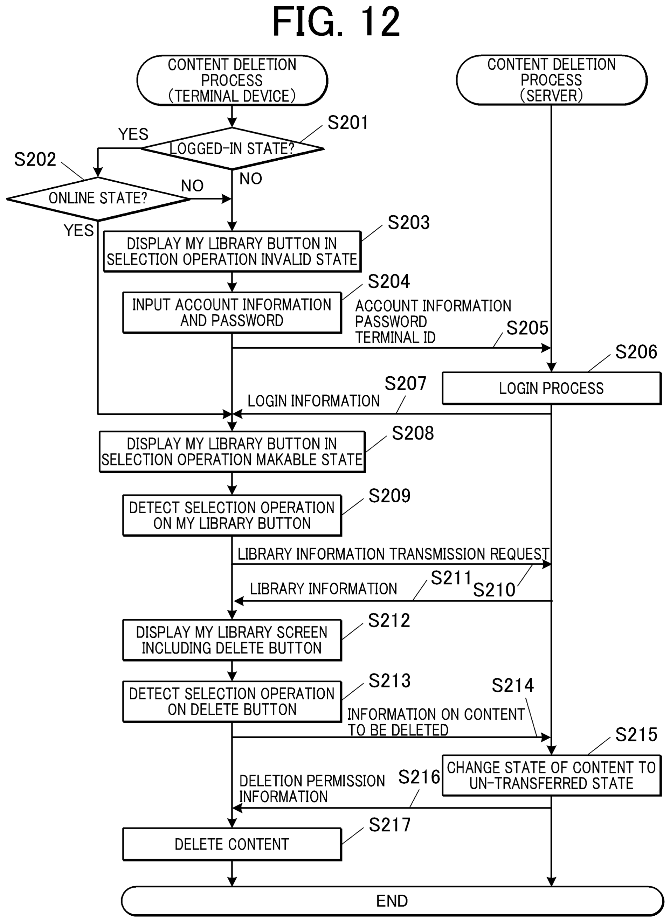

Hereinafter, a content deletion process for deleting a content will be described with reference to FIG. 12. The content deletion process is started when the menu screen 30 is displayed on the display 24. When the content deletion process is started, the CPU 21 of the terminal device 20 determines whether the terminal device 20 is in the logged-in state (Step S201). If the CPU 21 determines that the terminal device 20 is in the logged-in state (Step S201; YES), the CPU 21 determines whether the terminal device 20 is online (Step S202). If the CPU 21 determines that the terminal device 20 is online (Step S202; YES), the CPU 21 moves the process to Step S208 described later. If the CPU 21 determines that the terminal device 20 is in the not-logged-in state (Step S201; NO) or offline (Step S202; NO), the CPU 21 causes the display 24 to display the my library button 33 in the selection operation invalid state (Step S203) as shown in FIG. 4. In the state shown in FIG. 4, the my library screen 60 is not displayed in response to a selection operation on the my library button 33, and accordingly the deletion buttons 63 for deleting contents are not displayed on the my library screen 60. In other words, in this state, contents are not deleted in response to selection operations on the deletion buttons 63. Therefore, the state shown in FIG. 4 corresponds to a deletion prohibited state in which execution of a deletion process of deleting a content(s) from the storage 23 is prohibited. The process in Step S203 corresponds to a process of controlling the terminal device 20 to be in the deletion prohibited state. Further, determining whether the terminal device 20 is in the logged-in state in Step S201 corresponds to determining whether a content(s) stored in the storage 23 of the terminal device 20 is in an associated state of being associated with an account. To be more specific, determining that the terminal device 20 is in the not-logged-in state in Step S201 corresponds to determining that a content(s) stored in the storage 23 is not in the associated state, and determining that the terminal device 20 is in the logged-in state in Step S201 corresponds to determining that a content(s) stored in the storage 23 is in the associated state. This is because, as mentioned above, in absence of a login with an account, the content is associated with not an account but a terminal ID, whereas in presence of a login with an account, the content is associated with the account information A. Therefore, if the CPU 21 determines that the content is not in the associated state (Step S201; NO), the CPU 21 controls the terminal device 20 to be in the deletion prohibited state.

After Step S203, when the login button 34 is selected and account information A and a password are input on the login screen 50 (Step S204), the CPU 21 transmits the input account information A and password and the terminal ID to the server 10 (Step S205). The CPU 11 of the server 10 performs the login process by authenticating the obtained account information A and password (Step S206) and transmits login information indicating a successful login to the terminal device 20 (Step S207). If there is a content(s) not associated with an account at this stage, as in Step S111 and Step S112 in FIG. 5, the CPU 11 identifies a content ID associated with the terminal ID and associates the content ID with the account information A. Therefore, the process of transmitting the account information A and the terminal ID to the server 10 in Step S205 corresponds to a process of, in response to account information being input, transmitting data for associating a content with the account information to an external storage device.

When the terminal device 20 is in the logged-in state, as shown in FIG. 13, the CPU 21 of the terminal device 20 causes the display 24 to display the my library button 33 on the menu screen 30 in a selection operation makable state in which a selection operation is makable (Step S208). When the CPU 21 detects a selection operation on the my library button 33 (Step S209), the CPU 21 requests the server 10 to transmit library information (Step S210). The library information includes information on a list of contents to be displayed on the my library screen 60. The contents to be displayed on the my library screen 60 are contents associated with the currently logged-in account (contents for which licenses are given to the account). When the CPU 11 of the server 10 obtains the request to transmit library information, the CPU 11 refers to the license DB 135 to identify a content ID(s) and a content(s) associated with the currently logged-in account. The CPU 11 then transmits library information including a list of the identified content IDs and contents to the terminal device 20 (Step S211). For example, in the example shown in FIG. 11, the CPU 11 transmits the library information including information on the "Japanese Dictionary W" and the "English-Japanese Dictionary Y" associated with the account information A "aaa@xxxx.com" to the terminal device 20.

The CPU 21 of the terminal device 20 causes the display 24 to display the my library screen 60 shown in FIG. 14 on the basis of the obtained library information (Step S212). On the my library screen 60, content information 611 and content information 612 on the contents for which licenses are given to the currently logged-in account, download buttons 62 (operation elements) on which selection operations are made to download the content data of the contents, and the deletion buttons 63 on which selection operations are made to perform the deletion process of deleting the contents are displayed. The state in which the deletion buttons 63 are displayed corresponds to a state in which the deletion process is executable. In the example shown in FIG. 14, on the my library screen 60, the content information 611 and the content information 612 respectively on the "Japanese Dictionary W" and the "English-Japanese Dictionary Y" included in the library information are displayed. Since these contents are already downloaded, the download buttons 62 on the my library screen 60 shown in FIG. 14 are displayed in the selection operation invalid state. Alternatively, the download buttons 62 may be hidden.

When the CPU 21 detects a selection operation on one of the deletion buttons 63 (Step S213 in FIG. 12), the CPU 21 transmits information identifying a content to be deleted (content corresponding to the deletion button 63 on which the selection operation has been made, i.e., a deletion target) to the server 10 (Step S214). When the CPU 11 of the server 10 obtains the information on the content as the deletion target, the CPU 11 changes the state of the content in the license DB 135 to the un-transferred state (Step S215) . For example, when a selection operation is made on the deletion button 63 for the "English-Japanese Dictionary Y", the CPU 11 changes the data item "Transfer" in the record R2 for the "English-Japanese Dictionary Y" to "Undone" as shown in FIG. 15. When Step S215 finishes, the CPU 11 transmits deletion permission information to permit deletion of the content as the deletion target to the terminal device 20 (Step S216). When the CPU 21 of the terminal device 20 receives the deletion permission information, the CPU 21 deletes the content as the deletion target from the content data 232 and the terminal license DB 233, and also deletes the content information 612 on the content as the deletion target from the my library screen 60 (Step S217). When Step S217 finishes, the content deletion process ends.

In the above, when the terminal device 20 is in the not-logged-in state, the CPU 21 determines that the content is not in the associated state, and when the terminal device 20 is in the logged-in state, the CPU 21 determines that the content is in the associated state, but the method for determining whether the content is in the associated state is not limited thereto. For example, the CPU 21 of the terminal device 20 may refer to the license DB 135 of the server 10 to directly determine whether the content is associated with the account information A. Further, in the above, the deletion process is the process of deleting the content itself from the storage 23 of the terminal device 20, but the deletion process is not limited thereto. The deletion process may be a process of deleting a license(s) for using a content(s) from the storage 23. For example, the content data of all the contents may be stored in advance in the storage 23 of the terminal device 20 in the license ungiven state, and when a license for a certain content is given to the terminal device 20, the content may be made usable, and when the given license is deleted by the deletion process, the certain content may be made unusable. In the case where the target of the deletion process is a license, the state shown in FIG. 4 corresponds to the deletion prohibited state in which execution of the deletion process of deleting a license(s) from the storage 23 is prohibited. Further, determining whether the terminal device 20 is in the logged-in state in Step S201 corresponds to determining whether a license(s) stored in the storage 23 of the terminal device 20 and corresponding to a content(s) is in the associated state of being associated with an account. Further, the deletion prohibited state is not limited to the state in which the my library screen 60 cannot be displayed. For example, the deletion prohibited state may be a state in which the my library screen 60 is displayed but the deletion buttons 63 are displayed on the my library screen 60 in the selection operation invalid state. As another example, the deletion prohibited state may be a state in which the my library screen 60 is displayed but the deletion buttons 63 are not displayed (hidden) on the my library screen 60. Further, if the terminal device 20 has a function of reading and writing data from and to an external storage medium (memory card, etc.), the content data downloaded in the not-logged-in state may not be stored in the external storage medium. This can prevent the external storage medium from being detached from the terminal device 20 and the content data stored in the external storage medium from being deleted at another information device.

Next, the operation in a case where a request to add a matching content is made at the terminal device 20, namely, in a case where multiple license codes L for the same content are input, will be described. As shown in FIG. 7, there may be multiple license codes L for the same content. In other words, license codes L whose code details are different from one another may be issued for the same content. Multiple license codes L for the same content may be input at the terminal device 20. Meanwhile, at the terminal device 20, no more than one content data of the same content can be downloaded. In other words, two or more licenses for the same content cannot be given to the terminal device 20. If the second or subsequent license code L is input for a (the same) content at the terminal device 20 in the state in which a login with an account has been performed, a license for the content corresponding to the license code L can be associated with the account and stocked. However, if the second or subsequent license code L is input at the terminal device 20 in the not-logged-in state, the second or subsequent license for the content cannot be associated with an account. This renders the input second or subsequent license code L useless. Therefore, in this embodiment, in a case where a license (second license) for using a certain content (second content) is already given to the terminal device 20 in the not-logged-in state, if a license code L corresponding to a content (first content) that is the same as the certain content (second content) is input and a request to add (give) a license (first license) to the terminal device 20 is made, the license (first license) corresponding to the license code L is associated and stored with the terminal ID. At the time, the license corresponding to the input license code L is stored in the storage 23 of the terminal device 20 and the storage 13 (kept in the storage 13) of the server 10 as the ungiven license that can be given to an external device (e.g., another terminal device 20x) other than the terminal device 20. In other words, when a license code L of multiple license codes L for using a predetermined content is newly registered by the user, if a license corresponding to another license code L of the multiple license codes L is already registered as a given license associated with and dedicated to the terminal device 20, a license corresponding to the newly registered license code L is kept as the ungiven license that can be deverted to an external device. If a login with an account is performed thereafter, the second or subsequent license associated with the terminal ID is associated with the account. If two or more licenses for the same content are associated with the account, the content can be downloaded for use to the number of terminal devices 20, which is the same number as the number of licenses.

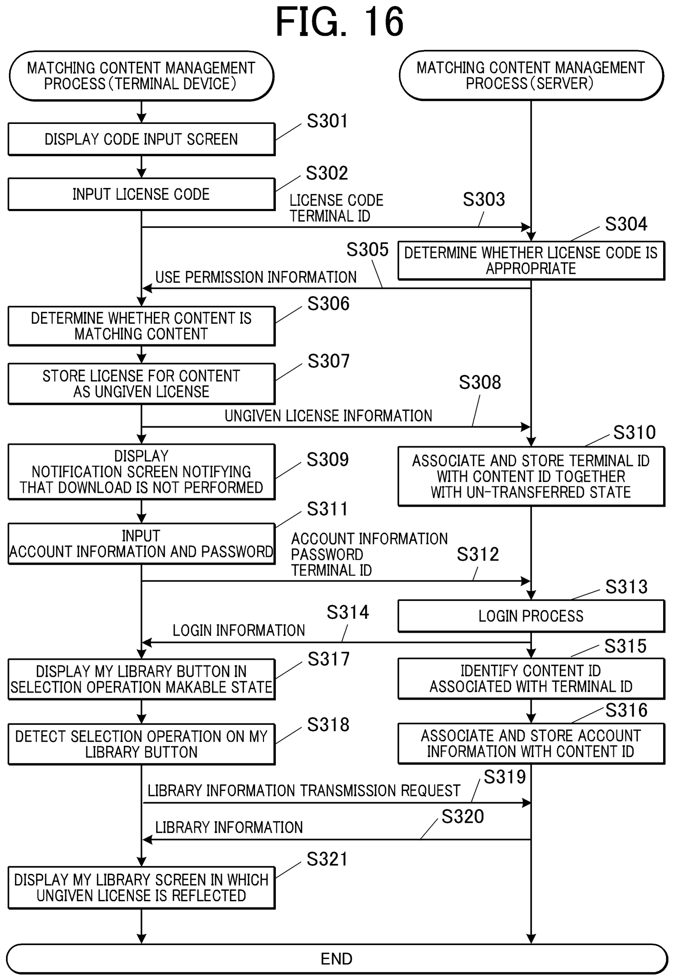

Hereinafter, a matching content management process for managing addition of a matching content will be described with reference to FIG. 16. The matching content management process is started when a selection operation is made on the code input button 32 on the menu screen 30. In this embodiment, the terminal device 20 is in the not-logged-in state at the start of the matching content management process. Further, in this embodiment, to the terminal device 20, licenses for two contents shown in the terminal license DB 233 in FIG. 9 are given, and the license DB 135 in the server 10 is in the state shown in FIG. 8. When the matching content management process is started, the CPU 21 of the terminal device 20 causes the display 24 to display the code input screen 40 (Step S301). In this embodiment, a license code L ("123-456-788" shown in FIG. 7) for a content ("English-Japanese Dictionary Y") for which a license is already given to the terminal device 20 and that is already downloaded to the terminal device 20 is newly input. When the input details of the newly input license code L are fixed by a selection operation on the decision button 42 (Step S302), the CPU 21 transmits the input license code L and the terminal ID of the terminal device 20 to the server 10 (Step S303).

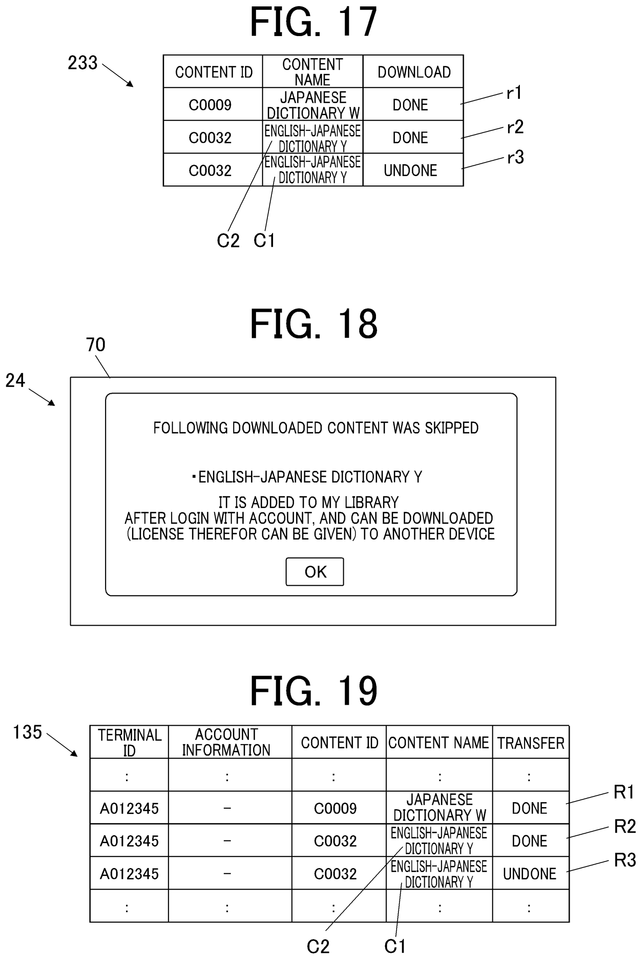

When the CPU 11 of the server 10 obtains the license code L and the terminal ID from the terminal device 20, the CPU 11 refers to the license code DB 134 to determine whether the license code L is appropriate (Step S304). If the CPU 11 determines that the license code L is appropriate, the CPU 11 transmits the use permission information for a content to the terminal device 20 (Step S305). The terminal device 20 obtaining the use permission information for a content corresponds to receiving a request to add a license for using a content to the terminal device 20. When the CPU 21 of the terminal device 20 obtains the use permission information, the CPU 21 refers to the terminal license DB 233 to determine whether the content corresponding to the use permission information is a matching content that matches one of the contents already registered in the terminal device 20 (Step S306). To be more specific, the CPU 21 determines that the content corresponding to the input license code L is the matching content if it is identical with one of the contents already registered in the terminal license DB 233 shown in FIG. 9. In this embodiment, the content "English-Japanese Dictionary Y" corresponding to the input license code L is already registered in the record r2 of the terminal license DB 233, and therefore the CPU 21 determines that the content is the matching content. If the CPU 21 determines that the content is the matching content, the CPU 21 stores, in the terminal license DB 233, a license for the content for which the use permission information has been obtained, as the ungiven license that can be given to an external device (Step S307). To be more specific, as shown in FIG. 17, in addition to the already registered records r1 and r2, the CPU 21 adds a record r3 for the input license code L to the terminal license DB 233, and puts "Undone" in the data item "Download" in the record r3. Hereinafter, the content "English-Japanese Dictionary Y" corresponding to the record r2 shown in FIG. 17 is referred to as a "second content C2", and a license for the second content C2 (given license associated with and dedicated to the terminal device 20) is referred to as a "second license". Further, the content "English-Japanese Dictionary Y" corresponding to the record r3 is referred to as a "first content C1", and a license for the first content C1 (ungiven license that can be diverted to an external device) is referred to as a "first license". The CPU 21 thereafter transmits the ungiven license information to the server 10 (Step S308). This ungiven license information indicates that the ungiven license for the first content C1 for which the use permission information has been obtained is registered in the terminal device 20. When the ungiven license information is registered, as shown in FIG. 18, the CPU 21 causes the display 24 to display a first notification screen 70 notifying that the content data of the first content C1 cannot be downloaded (Step S309). On this first notification screen 70, a message is displayed, for example, that download of the already downloaded content was skipped, and this content can be downloaded (license for the content can be given) to another terminal device 20 after a login with an account. Therefore, the first notification screen 70 corresponds to a screen notifying that the first license can be given to an external device, and also corresponds to a screen notifying that a license corresponding to the newly registered license code can be diverted to an external device.

When the CPU 11 of the server 10 obtains the ungiven license information, the CPU 11 associates and stores in the license DB 135 the terminal ID obtained in Step S303 and the first content C1 with the un-transferred state (Step S310). In other words, as shown in FIG. 19, in addition to the already registered records R1 and R2, the CPU 11 adds a record R3 for the input license code L in the license DB 135 and puts "Undone", which indicates the un-transferred state, in the data item "Transfer" in the record R3. Thus, the ungiven license that can be given to an external device is associated and registered with the terminal ID. When the CPU 11 does not obtain the ungiven license information from the terminal device 20, the CPU 11 determines that the content corresponding to the license code L is not the matching content and transmits the content data of the content to the terminal device 20. Thanks to the processes in Steps S301 to S310, even if the second or subsequent license code L for a (the same) content is input, the license code L is not wasted and can be stocked as the ungiven license. The maximum number of ungiven licenses that can be stocked may be set. If more than the maximum number of license codes L for the same content are input, the ungiven license(s) is not registered in Steps S307 and S310.

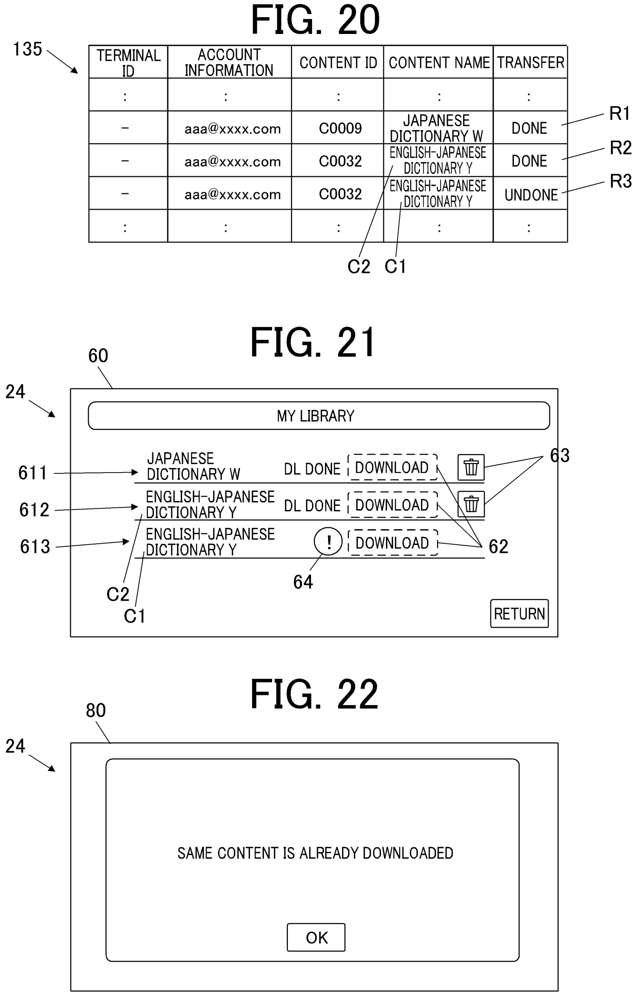

After Step S309, when the login screen 50 is displayed at the terminal device 20 and account information A and a password are input (Step S311), the CPU 21 transmits the input account information A and password and the terminal ID of the terminal device 20 to the server 10 (Step S312). The CPU 11 of the server 10 performs the login process on the basis of the obtained account information A and password (Step S313), and transmits login information indicating a successful login to the terminal device 20 (Step S314). The CPU 11 identifies a content(s) and a content ID(s) associated with the obtained terminal ID (Step S315), and associates and stores in the license DB 135 the obtained account information A with the content ID identified in Step S315 (Step S316). For example, as shown in FIG. 20, the CPU 11 registers "aaa@xxxx.com", which is the obtained account information A, in the data item "Account Information" in the records R1 to R3, in which the terminal ID "A012345" is recorded, thereby associating the account information A with the content IDs in the records R1 to R3. As a result, the ungiven license pertaining to the record R3 is associated with the account.

The CPU 21 of the terminal device 20 having obtained the login information causes the display 24 to display the my library button 33 on the menu screen 30 in the selection operation makable state (Step S317). When the CPU 21 detects a selection operation on the my library button 33 (Step S318), the CPU 21 requests the server 10 to transmit library information (Step S319). The CPU 11 of the server 10 having obtained the request generates library information on the basis of the license DB 135 and transmits the generated library information to the terminal device 20 (Step S320). In this embodiment, the CPU 11 transmits the library information including pieces of content information corresponding to the records R1 to R3 in the license DB 135 shown in FIG. 20. In other words, the library information to be transmitted includes the content information on the record R3 pertaining to the ungiven license.

The CPU 21 of the terminal device 20 causes the display 24 to display, on the basis of the obtained library information, the my library screen 60 where the ungiven license is reflected as shown in FIG. 21 (Step S321). On the my library screen 60 shown in FIG. 21, the content information 611 and the content information 612 corresponding to the record R1 and the record R2, respectively, and content information 613 corresponding to the record R3 are displayed. The content information 611 and the content information 612 correspond to contents already downloaded to the terminal device 20, and are identical with the content information 611 and the content information 612 shown in FIG. 14, respectively. Of these, the content information 612 corresponds to the second content C2, and the content information 613 corresponds to the first content C1 corresponding to the ungiven license. The first content C1 in the content information 613 is identical with the second content C2 in the content information 612, and therefore is not downloaded to the terminal device 20, and cannot be downloaded thereto until the second content C2 is deleted from the terminal device 20. Therefore, in the content information 613, the download button 62 is displayed in the selection operation invalid state. Alternatively, the download button 62 in the content information 613 may be hidden. In the content information 613, instead of "DL Done" displayed, an information button 64 (mark) indicating that the content data cannot be downloaded is displayed. When a selection operation is made on the information button 64, the CPU 21 causes the display 24 to display a second notification screen 80 shown in FIG. 22. On the second notification screen 80, a message that "Same content is already downloaded" is displayed. The second notification screen 80 corresponds to a screen notifying that the second content C2 same as the first content C1 is already stored in the storage 23. The deletion buttons 63 are displayed at positions corresponding to the content information 611 and the content information 612, but not at a position corresponding to the content information 613. This is because the first content C1 in the content information 613 is not downloaded yet. When Step S321 finishes, the matching content management process ends.

The matching-content-or-not determination in Step S306 may be performed by the CPU 11 of the server 10. In this case, Steps S304 to S310 are modified as follows. If the CPU 11 determines that the license code L is appropriate in Step S304, the CPU 11 refers to the license DB 135 to determine whether the content corresponding to the input license code L is the matching content. If the CPU 11 determines that the content is the matching content, the CPU 11 associates and stores in the license DB 135 the terminal ID obtained in Step S303 and the content ID and the content corresponding to the license code L obtained in Step S303 with the un-transferred state (Step S310). When Step S310 finishes, the CPU 11 transmits, to the terminal device 20, the use permission information to permit use of the first content C1 corresponding to the obtained license code L (to permit registration of the first content C1 in the terminal license DB 233) and the ungiven license information. The ungiven license information in this case indicates that the first license for the first content C1 is associated with the terminal ID and registered as the ungiven license in the server 10. When the ungiven license is registered, the CPU 11 does not transmit the content data of the corresponding first content C1 to the terminal device 20. In other words, the CPU 11 does not allow the content data to be downloaded to the terminal device 20. When the CPU 21 of the terminal device 20 obtains the use permission information and the ungiven license information, the CPU 21 performs the process in Step S307 to store the first license for the first content C1 as the ungiven license in the terminal license DB 233.

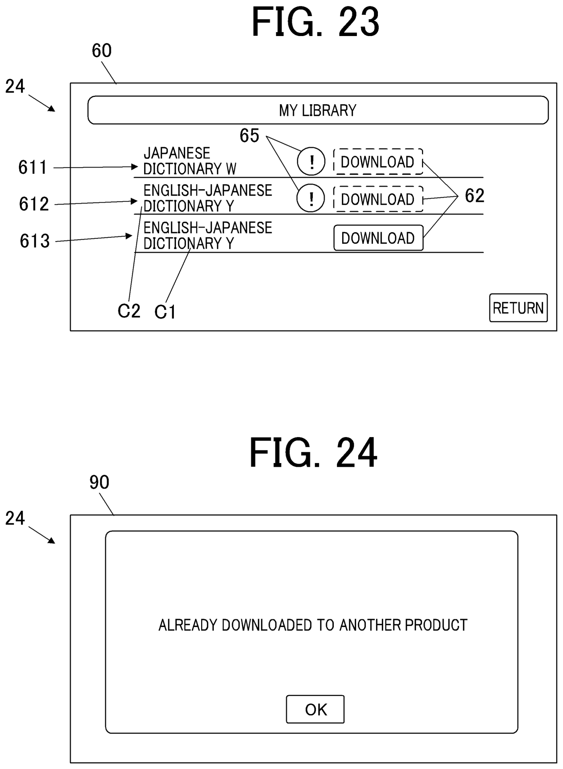

As described above, in the case where the ungiven license is associated with an account, a login with the account at another terminal device 20x allows the first content C1 corresponding to the ungiven license to be downloaded to the terminal device 20x and the ungiven license to be given thereto. Hereinafter, the operation in the case where a login with the account of this embodiment is performed at another terminal device 20x will be described. When a login with the account is performed at the terminal device 20x and a selection operation is made on the my library button 33 on the menu screen 30 thereof, the my library screen 60 shown in FIG. 23 is displayed on the display 24. On this my library screen 60, the download buttons 62 in the content information 611 and the content information 612 corresponding to the record R1 and the record R2, respectively, are displayed in the selection operation invalid state. This is because the contents corresponding to the records R1 and R2 are already downloaded to the terminal device 20 and accordingly cannot be downloaded to the terminal device 20x. Further, in the content information 611 and the content information 612, information buttons 65 each indicating that the content data cannot be downloaded are displayed. When a selection operation is made on one of the information buttons 65, the CPU 21 causes the display 24 to display a third notification screen 90 shown in FIG. 24. On the third notification screen 90, a message of "Already downloaded to another product" is displayed. Meanwhile, in the content information 613, the download button 62 is displayed in the selection operation makable state. This is because the first content C1 corresponding to the record R3 is not downloaded to the terminal device 20 and a license therefor is in the ungiven state, and accordingly the first content C1 can be downloaded to the terminal device 20x. When a selection operation is made on the download button 62 in the content information 613, the content data of the first content C1 is downloaded to the terminal device 20x and a record for the first content C1 is registered in its terminal license DB 233. Further, in the license DB 135 of the server 10 shown in FIG. 20, the data item "Transfer" in the record R3 is changed to "Done". Thus, stocked ungiven licenses can be utilized.

In the above, the license codes L for the respective contents are input, but a license code L for a composite content product that includes multiple contents may be input. In this case, if a certain content included in the composite content product is the matching content, the ungiven license for the matching content is registered in the same manner as the above. Further, in the above, the my library screen 60 is displayed on the display 24 after a login to check the ungiven license(s), but, in addition to this, the ungiven license(s) associated with the terminal device 20 may be displayed on the display 24 before the login.

As described above, the CPU 21 of the terminal device 20 according to this embodiment determines whether a content(s) stored in the storage 23 of the terminal device 20 is in the associated state of being associated with an account, and in response to determining that the content is not in the associated state, controls the terminal device 20 to be in the deletion prohibited state in which execution of the deletion process of deleting the content from the storage 23 is prohibited. This can prevent the content from being accidentally deleted in the state of not being associated with the account. Therefore, it is possible to suppress deletion of the content at the timing at which the license for the content is hardly recovered, and to properly maintain the license-for-content given state. If the content is accidentally deleted in the state of not being associated with the account, support by a service provider of the information processing system 1 is required to recover the license therefor. Preventing the content from being deleted due to a user's wrong operation can reduce the load on the support.

Alternatively, the CPU 21 determines whether a license(s) stored in the storage 23 of the terminal device 20 and corresponding to a content (s) is in the associated state of being associated with an account, and in response to determining that the license is not in the associated state, controls the terminal device 20 to be in the deletion prohibited state in which execution of the deletion process of deleting the license from the storage 23 is prohibited. This can prevent the content from being accidentally deleted in the state of not being associated with the account. Therefore, it is possible to suppress deletion of the content at the timing at which the license for the content is hardly recovered, and to properly maintain the license-for-content given state.

Further, the CPU 21 determines that the content or the license is not in the associated state in response to the terminal device 20 being in the not-logged-in state in which a login with the account is not performed. This makes it possible to easily and reliably determine whether the content or the license is in the associated state.

Further, the CPU 21 further determines whether the terminal device 20 is online, and controls the terminal device 20 to be in the deletion prohibited state in response to determining that the terminal device 20 is not online. This makes it possible to delete the content or the license for the content only when the terminal device 20 is online. Accordingly, this enables the server 10 to determine whether the content or the license for the content has been deleted from the terminal device 20 and properly manage the state of the license for the content.

Further, in response to the terminal device 20 being in the deletion prohibited state, the CPU 21 does not cause the display 24 to display the deletion button(s) 63 on which a selection operation is made to execute the deletion process, or causes the display 24 to display the deletion button(s) 63 in the selection operation invalid state. This can reliably prevent the content or the license for the content from being accidentally deleted in the state in which the content is not associated with the account.

Further, in response to the account information A on the account being input for the login with the account, the CPU 21 transmits data for associating the content with the account information A to the server 10. In the above embodiment, the data for associating the content with the account information A is the account information A and the terminal ID. This enables the server 10 to associate and manage the content with the account, and accordingly makes it possible to recover the license-for-content given state even if the content or the license for the content is deleted from or broken in the terminal device 20.

Further, in response to the terminal device 20 being not in the deletion prohibited state, the CPU 21 controls the terminal device 20 to be in the state in which the deletion process is executable. This makes it possible, in the situation where the license-for-content given state can be recovered, to delete the content or the license for the content and effectively utilize the storage region of the storage 23.

Further, in response to the terminal device 20 being not in the deletion prohibited state, the CPU 21 causes the display 24 to display the deletion button(s) 63 on which a selection operation is made to execute the deletion process. This allows the user to visually grasp that the content or the license for the content can be deleted. As a result, in a case where a deletable content or license for the content and a not-deletable content or license for the content are displayed, the technical state of the device can be prevented from not being able to be recognized, the technical state being whether the displayed contents or licenses for the contents can be deleted. Thus, the interaction process between the user and the terminal device 20 can reliably assist the user in performing a technical task (properly deleting the content or the license for the content).

Further, according to the information processing method of this embodiment, the CPU 21 executing the above processes makes it possible to suppress inappropriate deletion of the content or the license for the content and properly maintain the state of the license for the content. Further, the program 231 of this embodiment causes the CPU 21 to perform the above processes. This makes it possible to suppress inappropriate deletion of the content or the license for the content and properly maintain the state of the license for the content.

The present disclosure is not limited to the above embodiment, but can be modified in a variety of aspects. For example, in the above embodiment, the terminal device 20 is an electronic dictionary and the contents are dictionary contents, but these are not limitations. For example, the terminal device 20 may be a general-purpose device, such as a smartphone, a tablet or a laptop. Further, the contents may be videos, music, e-books, applications (programs), paid articles on news sites or the like, privileges such as items in games or the like, points in point-given services to loyalty cards, and/or various pay-as-you-go services or the like. For example, a music content may be purchased and made usable at a smartphone in the not-logged-in state, and at the time of a model change or the like, a login may be performed to associate the account with the music content so that the music content can be transferred to a new smartphone. Further, points may be given to and accumulated in a loyalty card on an application of a smartphone in the not-logged-in state, and at the time of, for example, a model change or point transfer to another card having a longer expiration period, a login may be performed to associate the account with the points so that the points can be transferred thereto. Still further, a paid article on a news site may be able to be subscribed in the not-logged-in state, and a login may be performed to associate the account with the subscribed article so that the subscribed article can be read on multiple terminal devices.

Further, in the above embodiment, when a license for a content is given to the terminal device 20, the content data is downloaded from the server 10, but this is not a limitation. Instead, when a license for a content is given, a use restriction on the content may be lifted. For example, the content data may be installed in the terminal device 20 in advance, and when a license for the content is given to the terminal device 20, the internal settings of this information processing device may be switched such that the content can be used.

Further, in the above embodiment, as the information for identifying a license(s) given to the information processing device, the terminal ID of the terminal device 20 is used, but this is not a limitation. For example, a license code L may be used as the information for the identifying. Alternatively, the information for the identifying may be a mark or the like that is associated with a license one-to-one and issued at the time of license giving.

Further, in the above, the HDD and the SSD of the storage 13 and the flash memory of the storage 23 are each used as the computer-readable medium storing the program(s) of the present disclosure, but the computer-readable medium is not limited thereto. As the computer-readable medium, an information recording medium, such as a CD-ROM, is applicable. Further, a carrier wave is also applicable as a medium that provides data of the program(s) of the present disclosure via a communication line.

Further, it is a matter of course that the detailed configuration and detailed operation of each component of the information processing system 1 in the above embodiment can be changed as appropriate within the range of not departing from the scope of the present disclosure. Although one or more embodiments of the present disclosure have been described, the scope of the present disclosure is not limited to the embodiments described above, but includes the scope of the present disclosure described in claims and their equivalents.

## Claims

1. An information processing device (20) comprising a processor (21) as a first processor or a second processor,
wherein the processor (21) as the first processor determines whether a content stored in a storage (23) of the information processing device (20) is in an associated state of being associated with an account, and in response to determining that the content is not in the associated state, controls the information processing device (20) to be in a first deletion prohibited state in which execution of a first deletion process of deleting the content from the storage (23) is prohibited, or
wherein the processor (21) as the second processor determines whether a license stored in the storage (23) of the information processing device (20) and corresponding to a content is in the associated state of being associated with the account, and in response to determining that the license is not in the associated state, controls the information processing device (20) to be in a second deletion prohibited state in which execution of a second deletion process of deleting the license from the storage (23) is prohibited.

2. The information processing device (20) according to claim 1,
wherein the processor (21) as the first processor determines that the content is not in the associated state in response to the information processing device (20) being in a not-logged-in state in which a login with the account is not performed, or
wherein the processor (21) as the second processor determines that the license is not in the associated state in response to the information processing device (20) being in the not-logged-in state in which the login with the account is not performed.

3. The information processing device (20) according to claim 1 or 2,
wherein the processor (21) as the first processor further determines whether the information processing device (20) is online, and controls the information processing device (20) to be in the first deletion prohibited state in response to determining that the information processing device (20) is not online, or
wherein the processor (21) as the second processor further determines whether the information processing device (20) is online, and controls the information processing device (20) to be in the second deletion prohibited state in response to determining that the information processing device (20) is not online.

4. The information processing device (20) according to any one of claims 1 to 3,
wherein in response to the information processing device (20) being in the first deletion prohibited state, the processor (21) as the first processor does not cause a display (24) to display an operation element (63) on which a selection operation is made to execute the first deletion process, or causes the display (24) to display the operation element (63) in a state in which the selection operation is invalid, or
wherein in response to the information processing device (20) being in the second deletion prohibited state, the processor (21) as the second processor does not cause the display (24) to display the operation element (63) on which the selection operation is made to execute the second deletion process, or causes the display (24) to display the operation element (63) in the state in which the selection operation is invalid.

5. The information processing device (20) according to any one of claims 1 to 4,
wherein in response to account information on the account being input for a/the login with the account, the processor (21) as the first processor transmits data for associating the content with the account information to an external storage device (10), or
wherein in response to the account information on the account being input for the login with the account, the processor (21) as the second processor transmits data for associating the license with the account information to the external storage device (10).

6. The information processing device (20) according to any one of claims 1 to 5,
wherein in response to the information processing device (20) being not in the first deletion prohibited state, the processor (21) as the first processor causes a/the display (24) to display an/the operation element (63) on which a/the selection operation is made to execute the first deletion process, or
wherein in response to the information processing device (20) being not in the second deletion prohibited state, the processor (21) as the second processor causes the display (24) to display the operation element (63) on which the selection operation is made to execute the second deletion process.

7. An information processing method that is performed by a computer (21) of an information processing device (20), comprising:
determining (S201) whether a content stored in a storage (23) of the information processing device (20) is in an associated state of being associated with an account, and in response to determining that the content is not in the associated state, controlling (S203) the information processing device (20) to be in a first deletion prohibited state in which execution of a first deletion process of deleting the content from the storage (23) is prohibited; or
determining (S201) whether a license stored in the storage (23) of the information processing device (20) and corresponding to a content is in the associated state of being associated with the account, and in response to determining that the license is not in the associated state, controlling (S203) the information processing device (20) to be in a second deletion prohibited state in which execution of a second deletion process of deleting the license from the storage (23) is prohibited.

8. A program as a first program or a second program causing a computer (21) of an information processing device (20) to:
as the first program, determine whether a content stored in a storage (23) of the information processing device (20) is in an associated state of being associated with an account, and in response to determining that the content is not in the associated state, control the information processing device (20) to be in a first deletion prohibited state in which execution of a first deletion process of deleting the content from the storage (23) is prohibited; or
as the second program, determine whether a license stored in the storage (23) of the information processing device (20) and corresponding to a content is in the associated state of being associated with the account, and in response to determining that the license is not in the associated state, control the information processing device (20) to be in a second deletion prohibited state in which execution of a second deletion process of deleting the license from the storage (23) is prohibited.
